# FASCICULE DE BREVET EUROPEEN

(11) **EP 0 896 990 B1**
(45) Date de publication et mention de la délivrance du brevet: **31.03.2004**
(21) Numéro de dépôt: 97401885.5
(22) Date de dépôt: 05.08.1997
(51) Int. Cl.: C09D 151/06

(54) **Vernis de surimpression**
Überdrucklack
Overprinting varnish

(43) Date de publication de la demande: 17.02.1999
(73) Titulaire: Atofina, 92800 Puteaux (FR)
(72) Inventeur: Feret, Bruno, 78960 voisins le Bretonneux (FR); Betremieux, Isabelle, 60580 Coye la Foret (FR)
(74) Mandataire: Chaillot, Geneviève

(56) Documents cités:
- EP-A- 0 194 687
- EP-A- 0 675 177

## Description

Le domaine de la présente invention est celui des vernis de surimpression.

On désigne sous ce nom des compositions de surfaçage destinées à apporter aux surfaces traitées, par exemple les papiers ou cartons imprimés ou non, une meilleure résistance aux agents extérieurs, en particulier une meilleure résistance aux frottements, à l'humidité et à la température, voire un meilleur aspect, par exemple le brillant. Parmi les solutions que l'industrie a retenues, on trouve les compositions aqueuses basées sur des latex mixtes du type polymères styrène/acrylate (SMA) - résines styrène-anhydride maléique.

La demande de brevet européen EP-A-675177 (Goodrich), divulgue ainsi des latex coeur-coquille résultant de la polymérisation de mélanges de monomères hydrophobes, tels que le méthacrylate de butyle, l'acrylate de 2-éthyl hexyle et le styrène au sein d'une solution aqueuse de résine styrène-anhydride maléique, résine rendue soluble par salification avec une base azotée volatile, en pratique l'ammoniaque.

On vient de trouver maintenant qu'on pouvait formuler des vernis de surimpression particulièrement performants en les basant sur des latex mixtes présentant le faisceau de caractéristiques suivantes :
- la résine styrène-anhydre maléique est une résine de faible masse moléculaire, comprise entre 500 et 5000, et d'indice d'acide tout au plus égal à 500,
- la proportion pondérale de ladite résine styrène-anhydre maléique par rapport à l'ensemble résine/(co)polymère de monomère(s) hydrophobe (s) est comprise entre 5 et 50%,
- la température de transition vitreuse du (co)polymère de monomère(s) hydrophobe(s) est inférieure à 30°C.

Les monomères hydrophobes sont tels que définis ci-après.

On fabrique les latex mixtes selon un procédé connu en soi, qui consiste à former une solution de résine styrène-anhydride maléique par dissolution à chaud ou à tiède de la résine dans l'eau en présence d'ammoniaque ou d'une base azotée volatile, puis d'y disperser le mélange de monomères hydrophobes, dont la polymérisation radicalaire est menée de façon classique en présence d'amorceurs hydrosolubles tels que le persulfate d'ammonium, de potassium ou de sodium ou encore en présence de peroxyde d'hydrogène et de catalyseurs rédox. La température de polymérisation est comprise entre 40 et 90°C, de préférence entre 65 et 85°C. La concentration en matières solides est comprise entre 20 et 60%. La polymérisation peut se faire selon un procédé à réacteur fermé ou en semi-continu. Dans le premier cas, les monomères ainsi que l'amorceur sont introduits en totalité dans la solution de l'oligomère, dès le début de la polymérisation et le milieu est maintenu en température et sous agitation pendant une durée pouvant varier de 2 à 4 heures. Dans le second cas, deux pompes doseuses permettent d'introduire de façon continue, l'une, le mélange de monomères, l'autre, la solution d'amorceur, dans la solution de polymère maintenue sous agitation et en température. La durée d'addition des monomères et de l'amorceur est comprise entre 30 minutes et 4 heures suivant la quantité et la nature des monomères à introduire. A la fin des coulées, le milieu est maintenu sous agitation et en température pendant une durée pouvant varier de 0 à 4 heures.

La résine styrène-anhydride maléique peut avantageusement être une résine partiellement estérifiée par un alcool linéaire ou ramifié, avec une chaîne hydrocarbonée ayant de un carbone (méthanol) à 18 carbones, ou par des mélanges de tels alcools.

Les monomères hydrophobes sont choisis parmi le styrène ou ses dérivés et les esters (méth)acryliques, avec éventuellement une faible proportion de monomère(s) non spécifiquement hydrophobe(s) apte(s) à ajuster la température de transition nitreuse ou la stabilité du latex. Ces monomères sont utilisables seuls ou en mélanges composés pour atteindre un copolymère doué de la température de transition vitreuse souhaitée. Cet ajustement se fait selon les règles connues de l'homme du métier. La qualification qui a été donnée d'hydrophobe s'entend, comme d'ordinaire dans ces produits, non pas de tel comonomère en particulier, mais de la globalité de la composition. On peut donc trouver des compositions de comonomère, et ce sera le cas dans les exemples, avec une faible proportion de monomère non spécifiquement hydrophobes, voir même franchement hydrophiles, qui sont communément introduits dans ces mélanges pour ajuster la température de transition vitreuse (Tg) ou la stabilité du latex.

Les vernis de surimpression selon l'invention sont des compositions comprenant de 30 à 90 % de latex mixte et de 5 à 20 % d'émulsions de cires de polyéthylène. Ils permettent de parvenir à un compromis très intéressant entre deux propriétés cependant contradictoires de la composante résineuse, l'augmentation de la dureté du film final, au prix d'une sensibilité néanmoins acceptable à à l'eau provenant de son hydrophilie. Les vernis de surimpression réalisés selon l'invention trouvent leur application dans les papiers pré-imprimés, les cartonnages rigides pour emballages, y compris celui des denrées alimentaires, les sacs multicouches, la vaisselle en papier, les emballages pour produits à chauffer sous micro-ondes, les couvertures de magazines et les papiers glacés.

Les exemples qui suivent feront mieux comprendre l'invention.

### EXEMPLES

Dans les exemples qui suivent, les latex ont été caractérisés par des tests dont on donne une description ci-après.

La masse moléculaire de la résine a été déterminée par GPC dans un milieu solvant tétrahydrofurane + 5% acide acétique sur des colonnes chromatographiques de type "PL-Gel".

Les tailles de particules ont été mesurées sur appareil Coulter N4SD.

Les viscosités ont été mesurées à 23°C sur un viscosimètre BROOKFIELD RV.

L'estimation de la résistance à la température est un test visuel qui consiste à exposer un carton revêtu de vernis de surimpression pendant 10 secondes sur une plaque métallique chauffée à 200°C et à en observer l'altération.

La mesure de brillant sous un angle de 60° a été effectuée selon la norme ASTM D-523.

La résistance à l'eau est évaluée soit à l'aide du test COBB, soit usuellement par dépôt d'une goutte d'eau sur la surface vernie et suivi de l'évolution de l'aspect après 15 secondes et 1 minute.

### EXEMPLE 1 : fabrication de latex mixtes

### Latex a) selon l'invention (latex à 30% de SMA)

Dans un réacteur tricol en verre d'une capacité de 3 litres, muni d'une agitation mécanique, on introduit dans l'ordre, 240 g d'une résine copolymère de styrène et d'anhydride maléique de Mn = 1600, d'indice d'acide compris entre 465 et 495, 1100 g d'eau déminéralisée et 136,8 g d'ammoniaque à 28 % dans l'eau. L'ensemble des réactifs est chauffé à 60°C et maintenu sous agitation jusqu'à la dissolution du copolymère de faible masse à effet dispersant. On porte la solution à 85°C, puis ajoute sous azote et agitation, un mélange de 207,2 g de styrène, 341,6 g d'acrylate de butyle, 5,6 g d'acide acrylique et 5,6 g d'acrylamide et un mélange d'une solution de 10 g de (NH₄)₂S₂O₈ dans 200 g d'eau, en procédant en continu, comme indiqué plus haut, pendant deux heures à l'aide de pompes doseuses dans la solution de copolymère préparée précédemment, à 85°C. Le milieu réactionnel est maintenu encore 2 heures à 85°C, puis refroidi sous faible agitation.

On obtient un latex dont les caractéristiques sont les suivantes :
Extrait sec = 45,6 %
Viscosité Brookfield à 23°C = 1000 mPa.s
pH = 9
Diamètre moyen des particules = 70 nm

### Latex b) : latex mixte selon l'art antérieur (latex à 65% de SMA).

Dans un réacteur tricol en verre d'une capacité de 3 litres, muni d'une agitation mécanique, on introduit dans l'ordre 520 g d'une résine copolymère de styrène et d'anhydride maléique de Mn = 1600, d'indice d'acide compris entre 465 et 495, 840,4 g d'eau déminéralisée et 296,4 g d'ammoniaque à 28 % dans l'eau. L'ensemble des réactifs est chauffé à 60°C et maintenu sous agitation jusqu'à la dissolution du copolymère de faible masse à effet dispersant. On porte la solution à 85°C, puis ajoute sous azote et agitation, un mélange de 103,6 g de styrène, 170,8 g d'acrylate de butyle, 2,8 g d'acide acrylique et 2,8 g d'acrylamide et un mélange d'une solution de 5 g de (NH₄)₂S₂O₈ dans 200 g d'eau, en procédant en continu pendant deux heures à l'aide de pompes doseuses dans la solution de polymère préparée précédemment, à 85°C. Le milieu réactionnel est maintenu encore 2 heures à 85°C, puis refroidi sous faible agitation.

On obtient un latex dont les caractéristiques sont les suivantes :
Extrait sec = 45,6 %
pH = 9
Diamètre moyen des particules = 66 nm

### EXEMPLE 2 : formulations de vernis de surimpression

On formule une composition de vernis de surimpression essentiellement basés sur des latex mixtes et une émulsion de cire de polyéthylène, suivant la formule (parties en poids)

| | |
|---|---|
| Latex mixte | 76 |
| Emulsion de cire de polyéthylène | 8 |
| Agent de résistance thermique (ZnO) | 3 |
| Agent de nivellement (éther de glycol) | 4 |
| Ammoniaque à 28% | 1,2 |
| Eau | 7,7 |

Un vernis a) est obtenu à partir du latex mixte a) de l'exemple 1, le vernis b) à partir du latex mixte b) du même exemple.

### EXEMPLE 3 : performances comparées des vernis de surimpression

Chacun des vernis de l'exemple 2 (vernis a, vernis b) a été appliqué sur une feuille de carton à l'aide d'un tire-film à base rodée et séché à 175°C pendant 1 minute. On a mesuré ou observé la tenue thermique, le brillant et la résistance à l'eau selon les test décrits plus haut. Les résultats sont rassemblés dans le tableau suivant.

| Vernis | Tenue thermique | Brillant à 60° | Résistance à l'eau |
|---|---|---|---|
| a | Bon | 69 | Mauvais |
| b | Bon | 71 | Bon |

## Revendications

1. Vernis de surimpression comportant essentiellement un latex mixte résultant de la polymérisation radicalaire d'une dispersion d'au moins un monomère hydrophobe au sein d'une solution aqueuse de résine styrène-anhydride maléique rendue alcaline par de l'ammoniaque ou une base azotée volatile et une émulsion de cire de polyéthylène, ledit ou lesdits monomères hydrophobes étant choisis parmi le styrène, les dérivés du styrène et les esters (méth)acryliques, avec éventuellement une faible proportion de monomère(s) non spécifiquement hydrophobe(s) apte(s) à ajuster la température de transition vitreuse ou la stabilité du latex,
**caractérisé par le fait que**, dans le latex mixte
- la résine styrène-anhydride maléique est une résine de masse moléculaire comprise entre 500 et 5000 et d'indice d'acide tout au plus égal à 500 ;
- la proportion pondérale de ladite résine styrène-anhydride maléique par rapport à l'ensemble résine/(co)polymère de monomère(s) hydrophobe(s) est comprise entre 5 et 50% ; et
- la température de transition vitreuse du (co)polymère de monomère(s) hydrophobe(s) est inférieure à 30°C.

2. Vernis de surimpression selon la revendication 1, **caractérisé par le fait que** la résine styrène-anhydride maléique est partiellement estérifiée par un alcool linéaire ou ramifié avec une chaîne hydrocarbonée ayant de un carbone (méthanol) à 18 carbones, ou par des mélanges de tels alcools.

3. Vernis de surimpression selon l'une des revendications 1 et 2, **caractérisé par le fait qu'**il comprend de 30 à 90% dudit latex mixte et 5 à 20% de ladite émulsion de cire de polyéthylène.

4. Papiers, cartonnages et emballages ayant été revêtus par un film du vernis de surimpression tel que défini à l'une des revendications 1 à 3.

## Claims

1. Overprint varnish essentially comprising a mixed latex resulting from the radical polymerization of a dispersion of at least one hydrophobic monomer in an aqueous solution of styrene/maleic anhydride resin rendered alkaline with ammonia or a volatile nitrogenous base and a polyethylene wax emulsion, the said hydrophobic monomer or monomers being chosen from styrene, styrene derivatives and (meth)acrylic esters, optionally with a small, proportion of not specifically hydrophobic monomer(s) capable of adjusting the glass transition temperature or the stability of the latex,
**characterized in that**, in the mixed latex,
- the styrene/maleic anhydride resin is a resin with a molecular mass of between 500 and 5 000 and with an acid number at the very most equal to 500;
- the proportion by weight of the said styrene/maleic, anhydride resin with respect to the resin/(co)polymer of hydrophobic monomer(s) combination is between 5 and 50%; and
- the glass transition temperature of the (co)polymer of hydrophobic monomer(s) is less than 30°C.

2. Overprint varnish according to Claim 1, **characterized in that** the styrene/maleic anhydride resin is partially esterified by a linear or branched alcohol with a hydrocarbonaceous chain having from one carbon (methanol) to 18 carbons or by mixtures of such alcohols.

3. Overprint varnish according to either of Claims 1 and 2, **characterized in that** it comprises from 30 to 90% of the said mixed latex and 5 to 20% of the said polyethylene wax emulsion.

4. Paper, cardboard and packaging having been coated with a film of the overprint varnish as defined in one of Claims 1 to 3.

## Patentansprüche

1. Überdrucklack, im Wesentlichen ein Mischlatex umfassend, das aus der radikalischen Polymerisierung einer Dispersion von mindestens einem hydrophoben Monomer innerhalb einer wässrigen Lösung von Styrol-Maleinanhydrid-Harz, die durch Ammoniak oder eine flüchtige stickstoffhaltige Base alkalisch gemacht wurde, und einer Emulsion aus Polyethylenwachs stammt, wobei das oder die hydrophobe(n) Monomer(e) unter dem Styrol, den Derivaten des Styrols und den (Meth)Acrylestern ausgewählt werden, mit gegebenenfalls einem geringen Anteil von nicht speziell hydrophobem(n) Monomer(en), das (die) in der Lage ist (sind), die Glasübergangstemperatur oder die Stabilität des Latex einzustellen,
**dadurch gekennzeichnet, dass** in dem Mischlatex
- das Styrol-Maleinanhydrid-Harz ein Harz mit einer Molekülmasse zwischen 500 und 5000 und einer Säurezahl von höchstens gleich 500 ist;
- der Gewichtsanteil des Styrol-Maleinanhydrid-Harzes im Verhältnis zu der Gesamtheit Harz/(Misch)Polymer aus hydrophobem(n) Monomer(en) zwischen 5 und 50 % beträgt; und
- die Glasübergangstemperatur des (Misch)Polymers aus hydrophobem(n) Monomer(en) niedriger als 30 °C ist.

2. Überdrucklack nach Anspruch 1, **dadurch gekennzeichnet, dass** das Styrol-Maleinanhydrid-Harz teilweise durch einen geradkettigen oder verzweigten Alkohol mit einer Kohlenwasserstoffkette, die einen Kohlenstoff (Methanol) mit 18 Kohlenstoffatomen aufweist, oder durch Gemische derartiger Alkohole verestert ist.

3. Überdrucklack nach Anspruch 1 oder 2, **dadurch gekennzeichnet, dass** er 30 bis 90 % des Mischlatex und 5 bis 20 % der Emulsion aus Polyethylenwachs enthält.

4. Papiere, Kartonagen und Verpackungen, die mit einer Überdrucklackschicht überzogen sind, wie in einem der Ansprüche 1 bis 3 definiert.
